# EUROPÄISCHE PATENTSCHRIFT

(11) **EP 1 586 892 B1**
(45) Veröffentlichungstag und Bekanntmachung des Hinweises auf die Patenterteilung: **25.06.2008**
(21) Anmeldenummer: 05004520.2
(22) Anmeldetag: 02.03.2005
(51) Int. Cl.: G01N 27/417

(54) **Verfahren zur Bestimmung des Ansprechverhaltens und der Empfindlichkeit eines Sauerstoffsensors in einer Messeinrichtung**
Method for the determination of the response caracteristic and sensitivity of an oxygen sensor in a measuring device
Méthode pour la determination de caracteristique de réponse et sensitivité d'un capteur d'oxygène dans une appareil de mesure

(30) Priorität: 15.04.2004 DE 102004018289
(43) Veröffentlichungstag der Anmeldung: 19.10.2005
(73) Patentinhaber: ABB AG, 68309 Mannheim (DE)
(72) Erfinder: Lawrenz, Uwe, Dr., 17489 Greifswald (DE); Wiedemann, Susanne, Dipl.-Ing., 63636 Brachttal (DE); Andres, Berthold, Dr., 63599 Bierbergemünd (DE); Ohland, Michael, 65835 Liederbach (DE)
(74) Vertreter: Schmidt, Karl Michael

(56) Entgegenhaltungen:
- DE-A- 3 705 823
- US-A- 4 071 817
- US-B1- 6 287 453
- PATENT ABSTRACTS OF JAPAN Bd. 009, Nr. 024 (P-331), 31. Januar 1985 (1985-01-31) & JP 59 168357 A (FUJIKURA DENSEN KK), 22. September 1984 (1984-09-22)
- KOENIG R.: "Zur Beschränkung des Anspruchsinhalts durch "bar"-Derivate" MITTEILUNGEN DER DEUTSCHEN PATENTANWÄLTE, Bd. 88, 1997, Seiten 62-72, XP001248632

## Beschreibung

Die Erfindung betrifft ein Verfahren zur Bestimmung des Ansprechverhaltens und der Empfindlichkeit eines Sauerstoffsensors in einer Messeinrichtung, sowie eine Messeinrichtung selbst, gemäß Oberbegriff des Patentanspruches 1.

Dies betrifft insbesondere das Sachgebiet der Analytik, genauer der Konzentrationsmessung von Sauerstoffspuren in Gasen mittels einer potentiometrischen Zirkondioxid Messzelle.

Potentiometrische Zirkondioxid-Sensoren nutzen die Eigenschaft, daß stabilisiertes, dh. teilweise durch MgO, CaO oder Y₂O₃ substituiertes ZrO₂ bei höheren Temperaturen ein nahezu reiner Oxidionenleiter ist. Trennt ein gasdicht gesinterter, mit Elektranenleitern (z.B. Pt-Schichten) versehener Festelektrolyt zwei Gasräume mit unterschiedlichen Sauerstoffkonzentrationen, werden an den Elektroden im elektrochemischen Gleichgewicht aufgrund der unterschiedlichen chemischen Potentiale an den Elektroden unterschiedliche elektrische Potentiale erzeugt. Schaltet man die Elektroden zusammen, erhält man eine Zellspannung, die von der Potentialdifferenz abhängt.

Meistens wird als Refernzgas Umgebungsluft verwendet, deren O2-Konzentration als ausreichend stabil angesehen wird.
Bei konstanter Meßzellentemperatur und bei konstantem Sauerstoffgehalt im Referenzgas, ist die an den Elektroden gemessene Spannung ein Maß für die Sauerstoffkonzentration im Messgas (Nernst'sche Gleichung).
Defekte an der Messzelle werden üblicherweise bei einer Nachkalibrierung der Messeinrichtung festgestellt.

Ein aktiver Bestandteil einer Zirkondioxidmesszelle ist die katalytisch wirksame Metallelektrode. Schädigungen durch z.B. schwefel- oder chlor-haltige Gase oder kurzzeitige Erhöhung der Betriebstemperatur können zu einer Alterung des gesamten Systems führen. Die Alterung führt zu einer Verlängerung der Ansprechzeit oder einer reduzierten Empfindlichkeit der Messzelle. Eine reduzierte Empfindlichkeit und / oder verlängerte Ansprechzeit der Messzelle kann dazu führen, dass bei einem Anstieg der Sauerstoffkonzentration ein zu niedriges Sauerstoff Signal angezeigt wird. Insbesondere im Anwendungsbereich der Messung von Sauerstoffspuren in Reingasen bleibt dieser Mangel häufig unerkannt, da sich der Messwert nur bei Störungen in der Prozessführung deutlich ändert. Eine defekten Messzelle kann einen falsch positiven Messwert erzeugen.

Aus der DE 37 05 823 A ist ein Verfahren zur Überprüfung einer Lambdasonde bekannt, bei welchem jedoch nur auf diesen Anwendungsfall applizierte Abweichungen zwischen Kalt- und Warmbetriebsfall unterschieden werden soll. Ein Verfahren zur Detektion des Alterung eines Sauerstoffsensors ist aus JP 59168357 bekannt.

Der Erfindung liegt daher die Aufgabe zugrunde, ein Verfahren sowie eine Messeinrichtung der gattungsgemäßen Art dahingehend zu verbessern, dass auch ohne Prüfgas eine Prüfung von Alterungseffekten am Sensor auf einfache Weise vorgenommen werden kann.

Die gestellte Aufgabe wird bei einem Verfahren der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen 2 bis 4 angegeben.

Die Erfindung beschreibt ein Verfahren, wie eine Fehlererkennung anstelle einer bisher üblichen Kalibrierung mit Prüfgas, einfach und zyklisch (Minuten, Tage bis Wochen) durchgeführt werden kann.

Der Kern der verfahrensgemäßen Erfindung ist hierbei, dass die Bestimmung anstelle von Prüfgas mittels eines elektrischen Teststrom erfolgt, der während der laufenden Messung seriell zur Signalspannung an dem Sensor angelegt und das Messsignal in Abhängigkeit zu der vorherig gemessen Sauerstoffkonzentration mit dem entsprechenden Wert einer Vergleichskurve verglichen wird. Aus diese Weise wird der Bediener aufgabengemäß frei von der Benutzung eines Testgases.

Dabei wird der Teststrom jeweils bei verschiedenen vorherig gemessenen Sauerstoffkonzentrationen bzw Sauerstoffpartialdrücken angelegt und das Messsignal mit den jeweiligen Werten der Vergleichskurve verglichen. Dadurch lässt sich zunächst die Vergleichskurve erstellen, an der dann später bei den Tests erkannt werden kann ob Alterungseffekte auftreten und der Messwert plausibel ist, oder schon ausserhalb einer akzeptablen Toleranz liegt.

In weiterer vorteilhafter Ausgestaltung ist angegeben, dass die Vergleichskurve innerhalb der Messeinrichtung oder einer signalverarbeitenden Einrichtung elektronisch abgespeichert ist, und der Vergleich mit der Vergleichskurve bei Auslösung eines Testzyklus automatisch erfolgt. Damit wird es möglich, dass mit Hilfe der elektronisch abgespeicherten Vergleichskurve zu jeder Zeit eine Selbstüberprüfung des Sensors erfolgen kann.

In weiterer Ausgestaltung ist daher angegeben, dass die Änderung der an dem Sensor messbaren Spannung während der Aufschaltung des Testsstroms zeitabhängig gemessen, und aus der Änderung der messbaren Spannung auf den Alterungszustand des Sensors geschlossen wird. Dies geschieht durch den automatischen Vergleich mit den Werten der Vergleichskurve.

In vorteilhafter Ausgestaltung ist angegeben, dass die Vergleichskennlinie über einen Konzentrationsbereich von 0,1 ppm bis 20,9 Vol % angewendet wird.

Weiterhin ist vorteilhaft ausgestaltet, dass die Vergleichskurve in einem elektronischen Speichermittel abgelegt ist. So kann der Vergleich automatisch erfolgen.

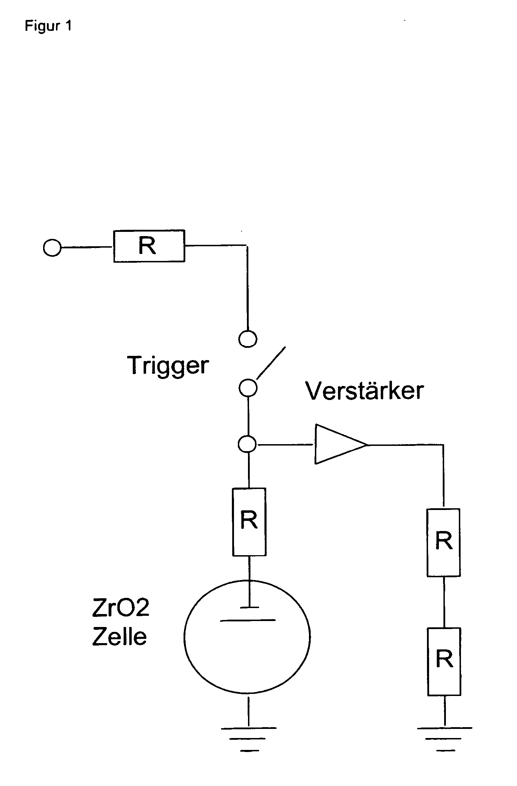

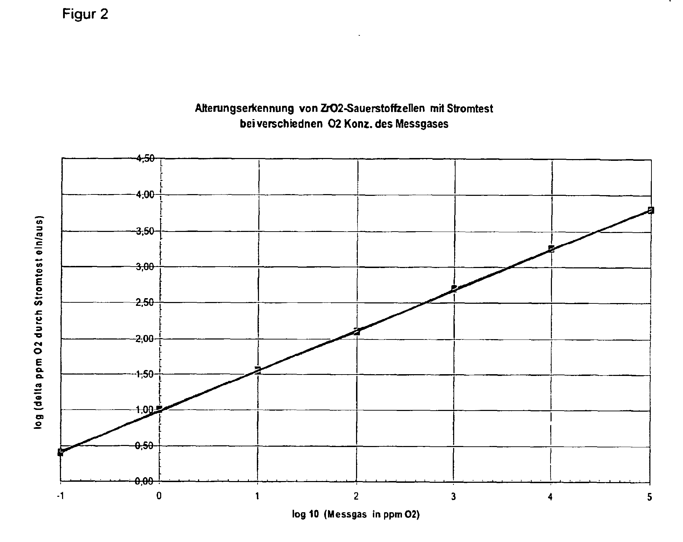

Die Alterungserkennung erfolgt durch Aufschalten eines Teststroms auf die Messelektrode. Die Abbildung 1 zeigt eine mögliche Ausführung der Messanordnung. Durch den Teststrom wird ein Messsignal erzeugt, das höher als die aktuell an der Messzelle herrschenden Sauerstoffkonzentration ist. Das Mass des Anstiegs bei einem bestimmten Teststrom und bekannter Sauerstoffkonzentration kann für die Beurteilung der Messzelle herangezogen werden.
Im Rahmen des Funktionstests wird der Teststrom eine bestimmte Zeit, z.B. 300 Sekunden aufgeschaltet. In dieser Zeit wird der Anstieg des Sensor Signals mit der am Sensor aktuell herrschenden Sauerstoffkonzentration vergleichen. Anhand einer sensor- und oder sensortyp- spezifischen Alterungskennlinie kann entschieden werden, ob der Sensor noch bzgl. seines Ansprechverhaltens und Empfindlichkeit innerhalb einer vorgegebenen Toleranz liegt. Ein typisches Beispiel einer Alterungskennlinie zeigt die Abbildung 2. An einem Sensorsignal oberhalb der Kennlinie lässt sich ein gealterter Sensor erkennnen.

Diese Verfahrensmaßgaben können entweder innerhalb einer Messeinrichtung fest implementiert sein, oder sie können als Datenfile auf einem Wechselspeichermedium oder als Datenfile aus einem Datennetz in die Messeinrichtung importierbar sein. Als Wechselspeichermedien kommen Disketten, CDs, Speicherkarten, oder sogenannte USB-sticks in Frage. Es ist jedoch auch denkbar, dass das Verfahren als Datenfile mit einer Kundenkennung via Internet abrufbar, und so in die Messeinrichtung importierbar ist. Hierbei kommt natürlich auch die Anwendung eines Lokalen Datennetzwerkes in Frage.

## Patentansprüche

1. Verfahren zur Bestimmung des Ansprechverhaltens und der Empfindlichkeit eines Sauerstoffsensors in einer Messeinrichtung, wobei
***bei einem potentiometrischen Festelektrolyt-Sensor*** die Bestimmung anstelle von Prüfgas mittels eines Teststromes erfolgt, der während der laufenden Messung seriell zur Signalspannung an dem Sensor angelegt und das Messsignal in Abhängigkeit zu der vorherig und/oder nachher gemessenen Sauerstoffkonzentration mit dem entsprechenden Wert einer Vergleichskurve verglichen wird, *indem der Strom*
bei verschiedenen vorherig gemessenen Sauerstoffkonzentrationen bzw Sauerstoffpartialdrücken angelegt und das Messsignal mit den jeweiligen Werten der Vergleichskurve verglichen wird.

2. Verfahren nach Anspruch 1,
**dadurch gekennzeichnet,**
**dass** die Vergleichskurve innerhalb der Messeinrichtung oder einer Signalverarbeitenden Einrichtung elektronisch abgespeichert ist, und der Vergleich mit der Vergleichskurve bei Auslösung eines Testzyklus automatisch erfolgt.

3. Verfahren nach Anspruch 2;
**dadurch gekennzeichnet,**
**dass** die Änderung der an dem Sensor messbaren Spannung während der Aufschaltung des Teststroms zeitabhängig gemessen, und aus der Änderung der messbaren Spannung auf den Alterungszustand des Sensors geschlossen wird.

4. Verfahren nach einem der Ansprüche 1 bis 3,
**dadurch gekennzeichnet,**
**dass** die Vergleichskennlinie über einen Konzentrationsbereich von 0,1 ppm bis 20,9 Vol % angewendet wird.

## Claims

1. Method for the determination of the response characteristic and sensitivity of an oxygen sensor in a measuring device, wherein
in a potentiometric solid electrolyte sensor, the determination takes place by means of a test current instead of test gas, which test current is applied in the course of the measurement serially with respect to the signal voltage at the sensor, and the measurement signal, depending on the previously and/or subsequently measured oxygen concentration, is compared with the corresponding value of a comparison curve by means of the current being applied at different previously measured oxygen concentrations or oxygen partial pressures and the measurement signal being compared with the respective values of the comparison curve.

2. Method according to Claim 1,
**characterized**
**in that** the comparison curve is stored electronically within the measuring device or a signal-processing device, and the comparison with the comparison curve is effected automatically when a test cycle is initiated.

3. Method according to Claim 2,
**characterized**
**in that** the change in the voltage that can be measured at the sensor, during the application of the test current, is measured in a time-dependent manner, and the ageing state of the sensor is deduced from the change in the measurable voltage.

4. Method according to any of Claims 1 to 3,
**characterized**
**in that** the comparison characteristic curve is used over a concentration range of 0.1 ppm to 20.9% by volume.

## Revendications

1. Procédé de détermination du comportement de réponse et de la sensibilité d'une sonde d'oxygène dans un dispositif de mesure, dans lequel la détermination s'effectue à l'aide d'une sonde potentiométrique à électrolyte fixe, non pas avec le gaz à tester mais au moyen d'un écoulement de test qui est appliqué en série sur la sonde pendant le déroulement de la mesure pour obtenir un signal de tension, le signal de mesure étant comparé à la valeur correspondante d'une courbe comparative en fonction de la concentration en oxygène mesurée précédemment ou mesurée ensuite, en appliquant l'écoulement à différentes concentrations ou pressions partielles d'oxygène mesurées précédemment, le signal de mesure étant comparé aux valeurs correspondantes de la courbe comparative.

2. Procédé selon la revendication 1, **caractérisé en ce que** la courbe de mesure est conservée électroniquement en mémoire dans le dispositif de mesure ou dans un dispositif de traitement de signaux, la comparaison à la courbe comparative s'effectuant automatiquement lors du déclenchement d'un cycle de test.

3. Procédé selon la revendication 2, **caractérisé en ce que** la modification de la tension mesurée sur le détecteur est mesurée en fonction du temps lorsque l'écoulement de test est appliqué, la modification de la tension mesurée permettant de déterminer l'état de vieillissement de la sonde.

4. procédé selon l'une des revendications 1 à 3, **caractérisé en ce que** la ligne caractéristique comparative est appliquée sur une plage de concentration qui s'étend entre 0,1 ppm et 20,9 % en volume.
